# EUROPEAN PATENT APPLICATION

(11) **EP 2 444 335 A1**
(43) Date of publication of application: **25.04.2012**
(21) Application number: 10732425.3
(22) Date of filing: 01.06.2010
(51) Int. Cl.: B65D 51/16, B65D 51/24, B27J 5/00

(54) **LID FOR CLOSING BOTTLES WITH A MEANS FOR CONTROLLING THE SEALING CONDITIONS, AND MACHINE TO BE USED IN THE PRODUCTION OF SAID LIDS**

(30) Priority: 17.06.2009 ES 200901437
(71) Applicant: Godoy Varo, José Luis, 17244 Cassà de la Selva (Girona) (ES)
(72) Inventor: Godoy Varo, José Luis, 17244 Cassà de la Selva (Girona) (ES)
(86) International application number: PCT/IB2010/001308
(87) International publication number: WO 2010/146426

(57) **Abstract**

The invention relates to a stopper for closing bottles with means for control of the plugging conditions and a machine for being used in the manufacture of such stoppers. Said stoppers comprises grooves, cuts or notches made in an outer surface of the stopper which, if they are located in a side wall of the stopper and with a first configuration which extends along said side wall from one of its bases to the other, provide a route of passage for gaseous fluid between the inside and the outside of the bottle, and when they are located at one of the bases and/or in a side wall of the stopper with at least one second configuration, increase the plugging capacity of the stopper in cooperation with an internal pressure.

## Description

### Field of the Art

The present invention relates to a stopper for closing bottles made of natural cork, of a product derived from cork or of a synthetic product, with means for control of the plugging conditions, especially applicable to bottles of wine, either to provide a selective passage for gaseous fluid between the inside and the outside of the bottle for the purpose of controlling the suitable evolution of the wine contained therein, for example in bottles of wine for laying down (wine suitable for aging in bottle), or for providing an increase in the plugging capacity of the stopper in opposition to an internal pressure, for example in bottles of sparkling wine.

The stopper of this invention can also be applied, in some of its embodiments, to alcoholic beverages such as spirits.

The present invention also relates to a machine for being used in the manufacture of such stoppers, and more specifically, in the manufacture of the mentioned means for control of the plugging conditions in stoppers partially prepared by methods.

The term recess used in this description encompasses any configuration allowing to form at least a groove, channel, conduit, scratch or notch.

Any reference in this description to wine for laying down should be made extensive likewise to alcoholic beverages such as spirits.

### State of the Art

Different types of stoppers for closing bottles made of both cork and of synthetic materials are known today. Perhaps the most widely used for wines for laying down is a natural cork stopper because its properties provide a closure with a certain interaction between the inside and the outside of the bottle. Said interaction allows the wines to micro-oxygenate and evolve more or less correctly, but since the stopper is made of a natural product, its features are very heterogeneous and in some cases they can lead to scarce or excessive micro-oxygenation resulting in a reduction or oxidation of the wine.

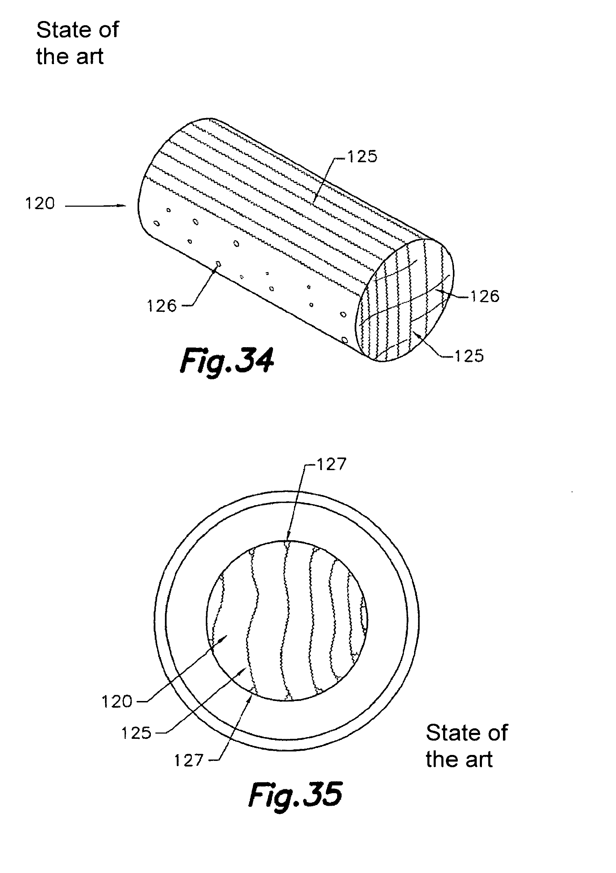

Figures 34 and 35 show a natural cork stopper 120 of the state of the art, which is currently the most demanded and valued for closing bottles of wine for laying down. The conventional natural cork stopper 120 has visible veins 125 and lenticels or porosities 126 characteristic of natural cork, in which the veins 125 are generally perpendicular to the lenticels or porosities 126. The stopper 120 is constructed such that the veins 125 are arranged considerably parallel to the longitudinal direction of the stopper and the lenticels or porosities 126 are considerably transverse thereto.

For the purpose of better knowing the means by which the surrounding atmosphere penetrates into a bottle when it is stoppered with a conventional natural cork stopper, the applicant has conducted tests in bottles stoppered with natural cork stoppers and also with colmated natural cork stoppers, with over two months of aging in a bottle.

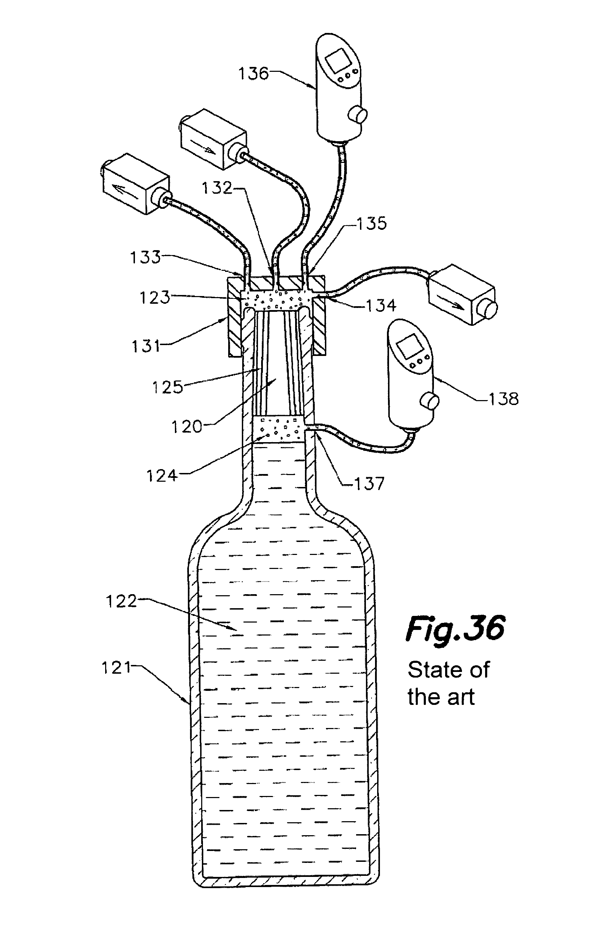

Figure 36 shows a conventional natural cork stopper 120 installed in a bottle 121 full of wine 122, and testing equipment used to conduct the mentioned tests on conventional natural cork stoppers. During the tests, several bottles 121 stoppered with conventional natural cork stoppers 120 have been placed in the vertical position and in a surrounding atmosphere controlled at a constant temperature. The testing equipment comprises a leak-tight cap 131 fixed externally to the neck of the bottle 121 providing a first chamber 123 between an inner surface of the cap 131 and outer surfaces of the stopper 120 and of the neck of the bottle 121. The cap 131 is provided with four connections coupled with the first chamber 123: a first connection 132 coupled to a pressure source through a first valve; a second connection 133 coupled to a vacuum source through a second valve; a third connection 134 coupled to the surrounding atmosphere through a third valve, for depressurizing said first chamber 123; and a fourth connection 135 coupled to a first pressure sensor 136 for collecting pressure values inside the first chamber 123. As is typical, there is formed inside the bottle 121 a second chamber 124 delimited by the surface of the wine 122 contained in the bottle 121 and inner surfaces of the stopper 120 and of the neck of the bottle 121. For the tests, the glass of the bottle 121 has been drilled to provide an additional connection 137 communicated with said second chamber 124, and this additional connection 137 has been coupled to a second pressure sensor 138 for collecting pressure values inside the second chamber 124.

The tests consisted of applying to the first chamber 123 compressed air at high pressure values within the range of pressures possible for atmospheric pressure combined with negative pressures at low pressure values within the range of pressures possible for atmospheric pressure to simulate in the first chamber 123 variations in the pressure conditions according to the variations to which the bottles of wine can be subjected for a time of storage in the natural state. After several tests with different bottles and stoppers it has been found, by comparing the graphs provided by the first and second pressure sensors 136, 138, that the pressure values given in the first chamber 123 and recorded by the first pressure sensor 136 are transmitted almost proportionally to the second chamber 124, such that the pressure values recorded by the second pressure sensor 138 coupled with the second chamber 124 reflect the pressure variations in the first chamber 123 in some cases almost immediately and in other cases after a certain time with a quite variable duration has elapsed for each bottle, very heterogeneous offsets in the pressure received in the second chamber 124 in relation to the pressure introduced in the first chamber 123 being detected between some stoppers and others. This confirms the existence of the interaction between natural pressure variations in the atmosphere and the pressure inside the bottle through the region occupied by the stopper, and the great heterogeneity of natural cork stoppers, which conditions the natural micro-oxygenation attributed to a natural cork stopper.

Once tested and removed from the bottles, the conventional natural cork stoppers 120 (Figures 34 and 35) were analyzed by means of a digital microscope with a resolution of x200 and information about irregularities in the surfaces of the natural stoppers 120 which explain the mentioned interaction between the atmospheric conditions outside and inside the bottle through the region occupied by the stopper was obtained. It has been found that a series of channels or grooves 127 of different depths and widths, some of up to 19 microns deep and up to 0.2 mm wide, are produced in sides of the cylindrical wall of the natural cork stopper in which the veins 125 are located. A feature of these grooves is that they are arranged in a direction substantially parallel to the longitudinal direction of the stopper. This indicates that these natural grooves provide paths of communication between the outer atmosphere and the inside of the bottle through the region occupied by the stopper for the natural and heterogeneous micro-oxygenation of the wine.

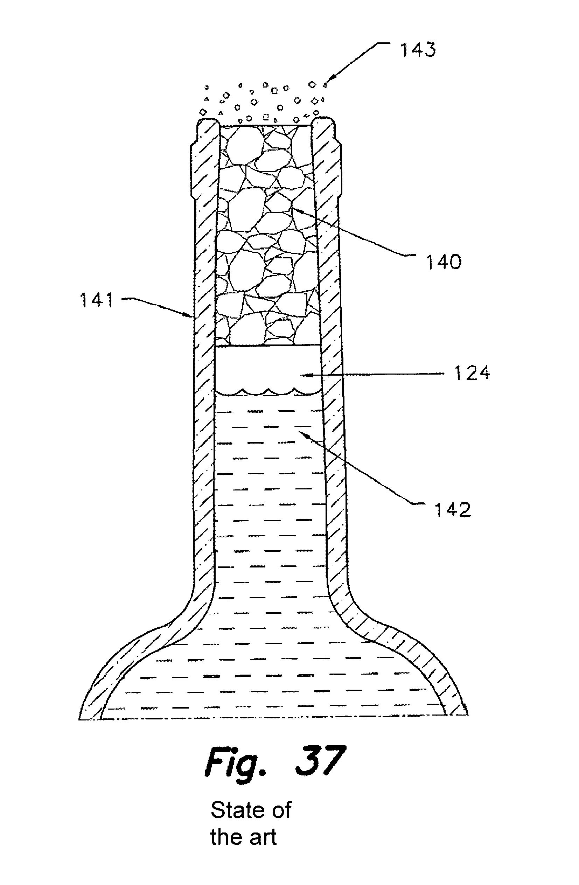

The so-called technical stoppers are also known which are of another product derived from cork. Figure 37 shows one of said technical stoppers 140 installed in the neck of a bottle 141. Several of these technical stoppers 140 have also been tested regarding their permeability to gases using the testing equipment and method described above in relation to Figure 36, resulting mainly in nil transmission. They are stoppers derived from cork granulate by-products that are compacted and prepared with adhesives. Said technical stoppers 140 are intended for the market of stoppers for young wines which do not require laying down, since the cork granulate that is tightly compacted and prepared with adhesives does not allow substantially any interaction between the inside and the outside of the bottle 141. This type of technical stopper 140 is recommended for bottling young red or white wines to be consumed in a relatively short time. Otherwise the wine does not evolve correctly since it is too tightly closed, and over time it has a taste which is known as a reduced taste.

Another type of known stoppers are stoppers made of products derived from petroleum, referred to as synthetic stoppers (not shown). These stoppers have also been tested regarding their permeability to gases using the equipment and method described above in relation to Figure 36, generally resulting in excessive transmission and in some cases, nil transmission. Overall, said synthetic stoppers usually give results that are contrary to the technical stoppers derived from cork, i.e., in most cases they allow excessive interaction between the outer atmosphere and the inside of the bottle, which causes excessive oxygenation of the wine.

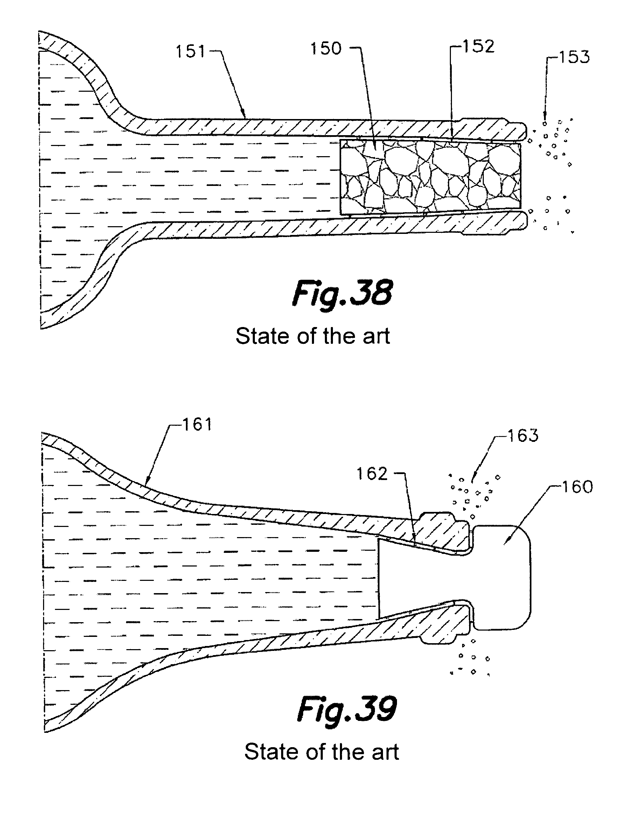

On the other hand, in the wine sector there is a market for sparkling wine, such as cava or champagne, for which technical stoppers are normally used in which their entire composition is based on cork granulate, such as the technical stopper 150 shown in Figure 38 installed in a bottle 151 containing sparkling wine, or with a part of the composition based on cork granulate combined with natural cork discs at the ends, such as the technical stopper 160 shown in Figure 39 installed in a bottle 161 containing sparkling wine. Stoppers of this type usually result in greater security than those made of natural cork when preserving the gas of the sparkling wine, since their density and structure is very regular and firm, but over time they contract and the gas 153, 163 tends to come out through the interface between the stopper 150, 160 and the neck of the bottle 151, 161, as is shown in Figures 38 and 39. The use of synthetic stoppers for closing bottles of sparkling wine is also known, although such stoppers also give problems similar to those described above in relation to technical stoppers.

Patent EP 0629559 B1 discloses a stopper for closing bottles of wine comprising a base body made of a synthetic material and a barrier layer which is impervious to liquids and greatly inhibits the passage of gases therethrough. The barrier layer is formed by a microfilter laminate in contact with the base body and is designed to allow an exchange of gases between the inside of the bottle and the outer atmosphere. In some embodiments, the base body is solid or substantially solid to prevent such exchange of gases, whereas in other embodiments the base body comprises one or more longitudinal perforations communicating the barrier layer with the surrounding atmosphere to facilitate the mentioned gaseous exchange between the inside of the bottle and the outer atmosphere.

Patent US 7143903 B 1 describes a stopper made of synthetic material for bottles of wine, which comprises a central tubular duct to communicate the inside of the bottle with the outer atmosphere, and a membrane fixed transversely in the duct to allow the passage of gases therethrough and prevent the passage of liquids.

Patent application US 2009/0123766 A1 discloses a liner for a cork stopper and a method for controlling the oxygen diffusion rate of the closure. The liner comprises a cap made of several metal foils or of PVDC provided with perforations.

The stoppers of the three background documents mentioned above involve relative complexity in their construction and the use of several parts of different materials, which results in a relatively high economic cost in comparison with stoppers made of conventional natural or synthetic materials.

Based on the previous discussion of the state of the art, it is evident that there is a need to provide stoppers for closing bottles provided with effective means for control of the plugging conditions, either for increasing or for reducing the interaction between the outer atmosphere and the inside of the bottle through the region occupied by the stopper, which are relatively easy and inexpensive to manufacture.

### Summary of the Invention

According to a first aspect, the present invention provides a stopper for closing bottles with means for control of the plugging conditions. The stoppers of the present invention are herein referred to as "Cork Micro-Oxygenation" ("CMO"). The mentioned means for control comprise one or more cuts, notches or recesses formed in one or more of the surfaces of the stopper, such that the plugging conditions of the stopper are determined by the configuration of said cuts, notches or recesses and by the position of the surface of the stopper in which the cuts, notches or recesses are formed in relation to the neck of the bottle.

For example, in one embodiment, the stopper comprises one or more recesses or notches configured as grooves formed in a side wall of the stopper facing and in contact with the inner surface of the neck of the bottle. The mentioned grooves extend along said side wall from one of its bases to the other for the purpose of providing a route of passage for gaseous fluid between the inside and the outside of the bottle. This embodiment is suitable for closing bottles of wine for laying down, for example, red wines, since the recesses or notches are sized to facilitate micro-oxygenation between the inside and the outside of the bottle during the storage time, which allows the wine to have suitable and substantially homogenous conditions of aroma, flavor, structure and color in all the bottles closed by means of different stoppers. The stopper optionally incorporates a piece of treated or untreated wood, secured at the inner end of the stopper, at its interface with the wine, to be able to transmit aroma and tannins to the wine.

In another embodiment, the stopper comprises a cut or recess at one of the bases and/or a cut or recess in a side wall of the stopper providing a ring-shaped plugging lip in opposition to a pressure inside the bottle which generates a force for expelling the stopper. This ring-shaped lip is pressed against the inner surface of the neck of the bottle by said internal pressure, which provides an increase in the plugging capacity of the stopper in cooperation with the pressure inside the bottle. The mentioned cut or recess can be formed in the base corresponding to the inner end of the stopper or in the side wall thereof, or it can even combine several cuts or recesses formed in the base and in the side wall of the stopper. This embodiment is suitable for closing bottles of white wines, and especially sparkling wines, since they assure the leak-tightness and prevent gas from leaking from the inside of the bottle to the outside.

According to a second aspect, the present invention provides a machine for being used in the manufacture of stoppers for closing bottles with means for control of the plugging conditions, said stoppers being made of a material derived from cork or synthetic material. The machine is **characterized in that** it comprises means for rotating the stoppers in relation to an engraving or cutting tool, or for rotating said engraving or cutting tool in relation to the stoppers, to make at least one recess, notch or cut in a side wall of the stopper and/or in at least one of its bases. In one embodiment, the mentioned means for rotating the stoppers comprise a conveyor, such as a conveyor belt, for example, on which the stoppers are supported on one side of their side wall and said engraving or cutting tool is facing the opposite side of the side wall of the stoppers to make said recess, notch or cut in the side wall of the stoppers while they are supported on the conveyor. The mentioned engraving or cutting tool is a circular cutting head, and said means for rotating the stoppers comprise a rotating plate which moves the stoppers synchronously with the operation of said circular cutting head, which is configured and arranged to make said recess, notch or cut in a base of the stopper. Optionally, the mentioned engraving or cutting tool comprises an ultrasound device.

The term recess used in this specification comprises any configuration which allows forming at least one groove, notch, channel, grating, score or duct.

### Brief Description of the Drawings

The foregoing and other features and advantages will become more evident from the following detailed description of several embodiments in reference to the attached drawings, in which:
Figures 1 to 6 are schematic perspective views of a stopper for closing bottles with means for control of the plugging conditions according to different embodiments of the first aspect of the present invention applicable to bottles of wine for laying down;
Figure 7 is a partial cross-section view of a stopper according to the embodiment shown in Figure 2 installed in a bottle of wine for laying down;
Figures 8 to 13 are schematic perspective views of a stopper for closing bottles with means for control of the plugging conditions according to different embodiments of the first aspect of the present invention applicable to bottles of sparkling wine;
Figures 14 and 15 are partial cross-section views, at different enlargement scales, of the stopper of Figure 8 installed in a bottle of sparkling wine;
Figures 16 and 17 are partial cross-section views, at different enlargement scales, of the stopper of Figure 9 installed in a bottle of sparkling wine;
Figures 18 and 19 are partial cross-section views, at different enlargement scales, of the stopper of Figure 10 installed in a bottle of sparkling wine;
Figures 20 and 21 are partial cross-section views, at different enlargement scales, of the stopper of Figure 11 installed in a bottle of cava or champagne;
Figures 22 and 23 are partial cross-section views, at different enlargement scales, of the stopper of Figure 12 installed in a bottle of cava or champagne;
Figures 24 and 25 are partial cross-section views, at different enlargement scales, of the stopper of Figure 13 installed in a bottle of cava or champagne;
Figures 26, 27 and 28 are side elevational, cross-section and bottom plan views, respectively, of a stopper of the present invention including an additional piece of wood;
Figure 29 is a partial cross-section view of the stopper of Figures 26, 27 and 28 installed in a bottle of wine for laying down with a piece of wood incorporated;
Figure 30 is a perspective view of a machine for the manufacture of recesses or cuts forming the means for control of the plugging conditions in the stoppers according to an embodiment of the second aspect of the present invention;
Figure 31 is a plan view of a machine for the manufacture of recesses or notches forming the means for control of the plugging conditions in the stoppers according to another embodiment of the second aspect of the present invention;
Figures 32 and 33 are enlarged details of the machine of Figure 31 showing different particularities of its operation;
Figures 34 and 35 are perspective and bottom plan views, respectively, of a natural cork stopper of the state of the art after being used;
Figure 36 is a schematic cross-section view of a natural cork stopper of the state of the art installed in a bottle of wine and subjected to testing by means of testing equipment;
Figure 37 is a partial cross-section view of a technical stopper of the state of the art installed in a bottle of wine; and
Figures 38 and 39 are partial cross-section views of two technical stoppers of the state of the art installed in respective bottles of sparkling wine.

### Detailed Description of Several Embodiments of the Invention

Figure 37 depicts a problem of bottling with technical stoppers. In a bottle 141 containing wine for laying down 142 and closed with a technical stopper 140 of the state of the art, a chamber 124 is formed inside the bottle between the surface of the wine 142, the neck of the bottle and the lower base of the stopper 140. The leak-tight closure between the neck of the bottle 141 and the technical stopper 140 does not allow any interaction between said chamber 124 inside the bottle and the surrounding air 143, and this prevents suitable evolution of the wine 142 contained in the bottle 141 during the storage time.

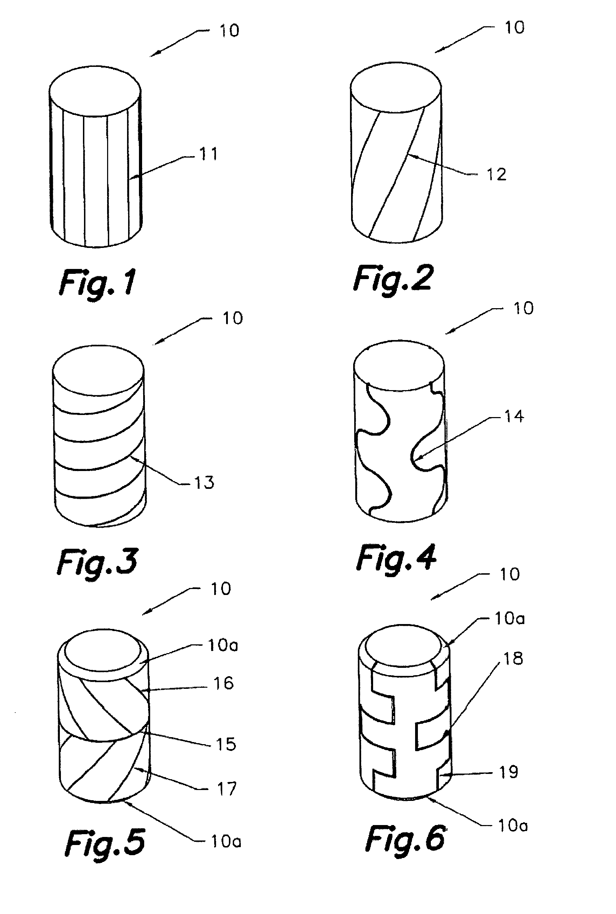

Figures 1 to 6 depict a possible solution to said problem by using stoppers according to the present invention. The stoppers 10 of Figures 1 to 6 correspond to different embodiments and are provided for closing bottles of wine for laying down. They can be made of natural cork, of a product derived from cork (technical stoppers) or of a synthetic product. They all have an approximately cylindrical side wall and two approximately planar opposite bases.

The stopper 10 of Figure 1 comprises a series of rectilinear grooves 11 formed in its cylindrical side wall, distributed around same and substantially parallel to the longitudinal direction of the stopper 10. The mentioned rectilinear grooves 11 extend from one base to the other, and provide the gaseous fluids with a shorter and consequently quicker path, so they are suitable for a wine requiring normal micro-oxygenation.

The stopper 10 of Figure 2 comprises a series of helical grooves 12 formed in its cylindrical side wall and distributed around same. The mentioned helical grooves 12 extend from one base to the other, and have a relative large helix passage providing a moderately long path for the gaseous fluids.

The stopper 10 of Figure 3 also comprises a series of helical grooves 13 similar to those described in relation to Figure 2, but with a relatively small helix passage, such that the gaseous fluids have a longer and consequently slower path along the helical grooves 13.

The stopper 10 of Figure 4 comprises a series of winding grooves 14 formed in its cylindrical side wall and distributed around same. The mentioned winding grooves 14 extend from one base to the other.

The stopper 10 of Figure 5 comprises a circumferential groove 15 located approximately halfway between the bases. A first series of helical grooves 16 are formed in the cylindrical side wall, distributed around same, and extend from said circumferential groove 15 up to one of the bases, and a second series of helical grooves 17 are formed in the cylindrical side wall, distributed around same, and extend from the circumferential groove 15 up to the other base. The mentioned first and second series of helical grooves 12 have opposite helix directions.

The stopper 10 of Figure 6 comprises a series of interrupted grooves 18, 19 formed in its cylindrical side wall and distributed around same. The mentioned interrupted grooves extend from one base to the other, and each of them is formed by circumferential groove segments and rectilinear groove segments coupled at their ends.

Grooves 14 to 19 of stoppers 10 shown in Figures 4, 5 and 6 are suitable for special cases in which the gaseous fluids require a long path and high friction effects. It will be observed in Figures 5 and 6 that the stopper has a bevel 10a in the confluence of the cylindrical side wall with each of the bases, as is typical in some stoppers of this type to facilitate their installation in the neck of the bottle, and the grooves can end in said bevel 10a, as is shown in Figure 5, or extend through the bevel 10a and end in the base, as is shown in Figure 6. In any embodiment of the stopper 10 of the present invention, the grooves can vary in shapes, lengths, widths and depths such that a variety of stoppers intended for specific wines or for wines in general can be obtained.

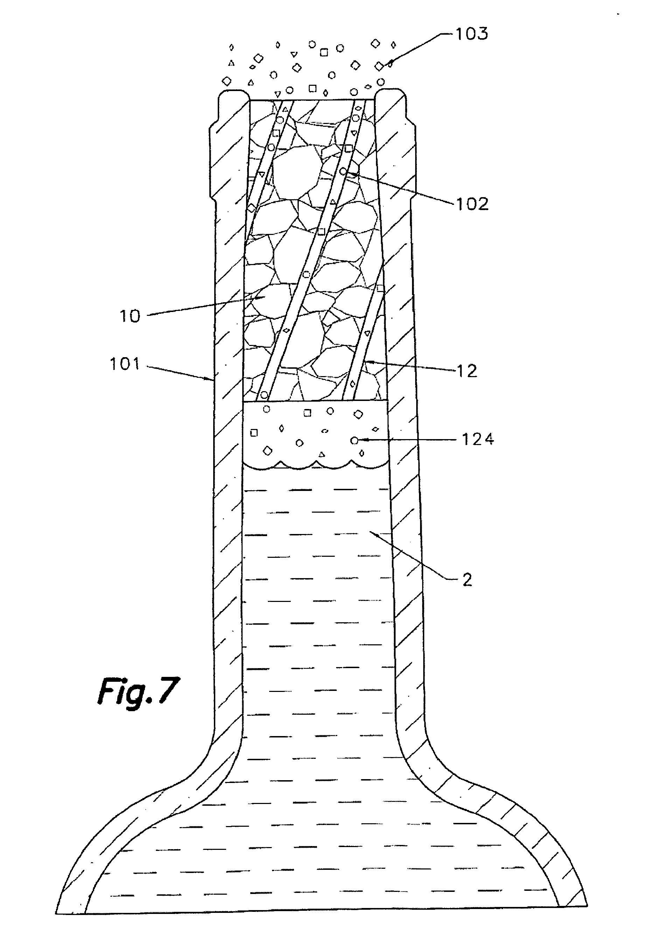

Figure 7 shows by way of example stopper 10 of Figure 2, which in this example is a technical stopper, installed in a bottle 101 full of wine 2. The neck of the bottle 101 stoppered with the stopper 10 of the present invention allows a micro-circulation of gaseous fluid 102 between the surrounding atmosphere 103 and the wine 2 through the grooves 12.

Figures 38 and 39 depict two other examples of the current drawbacks relating to closing bottles of white wines or sparkling wines. Figure 38 depicts closing a bottle 151 of sparkling wine with a stopper 150, in which a long time span makes the stopper mechanically contract and the gases 153 tend to come out through the interface 152 between the stopper and the glass. Figure 39 also shows the drawback of a stopper 160 in a bottle 161 of cava or champagne, in which the stopper 160 contracts over time and allows the gases to come out from inside the bottle to outside through an interface 162 between the neck of the bottle 161 and the stopper 160.

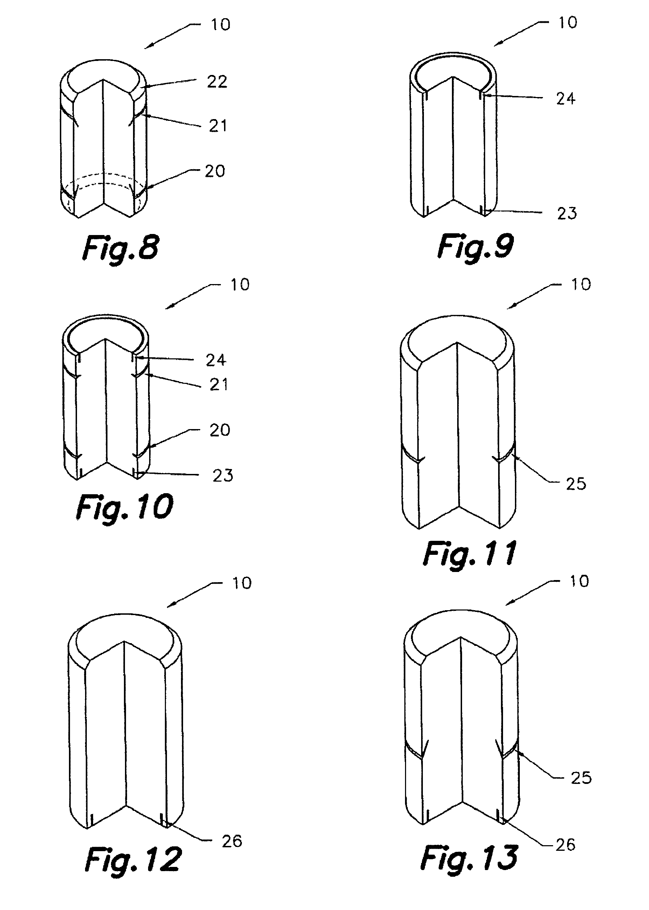

Figures 8 to 13 depict a possible solution to the foregoing problem by means of different embodiments of the stopper of the present invention intended for sparkling wines. Figure 8 shows a stopper 10 in which substantially circular grooves 20, 21 have been made in its diameter, close to chamfers 22 in the confluence of the side wall with the bases. Figure 9 shows a stopper 10 in which substantially circular grooves 23, 24 are formed at its two end bases close to the periphery thereof. Figure 10 depicts a stopper 10 with a combination of the grooves 20, 21 in the side wall and grooves 23, 24 at the bases described above in relation to Figures 8 and 9, respectively.

The stoppers 10 depicted in Figures 11, 12 and 13 are corks having larger diameters and are intended for bottling cava or champagne. In an embodiment shown in Figure 11, the stopper 10 has a circular channel 25 in its diameter. The stopper 10 of Figure 12 has a circular channel 26 at its base. Figure 13 shows a stopper 10 which has a combination of both circular grooves 25, 26 made in the diameter of the side wall and in the base as has been described above in relation to Figures 11 and 12, respectively. It must be pointed out that in Figures 11, 12 and 13 there is a bevel at each of the ends of the stopper 10, which is typical in the manufacture of some of these stoppers in order to thus allow greater flexibility when bottling. Making a bevel on the outer part in the stopper 10 intended for cava or champagne is also known so that metal sheets withstanding the pressure connect better. The circular grooves 20, 21, 23, 24 shown in Figures 8 to 13 can be applied both to technical stoppers and to synthetic stoppers, and also to natural cork stoppers if it is considered appropriate.

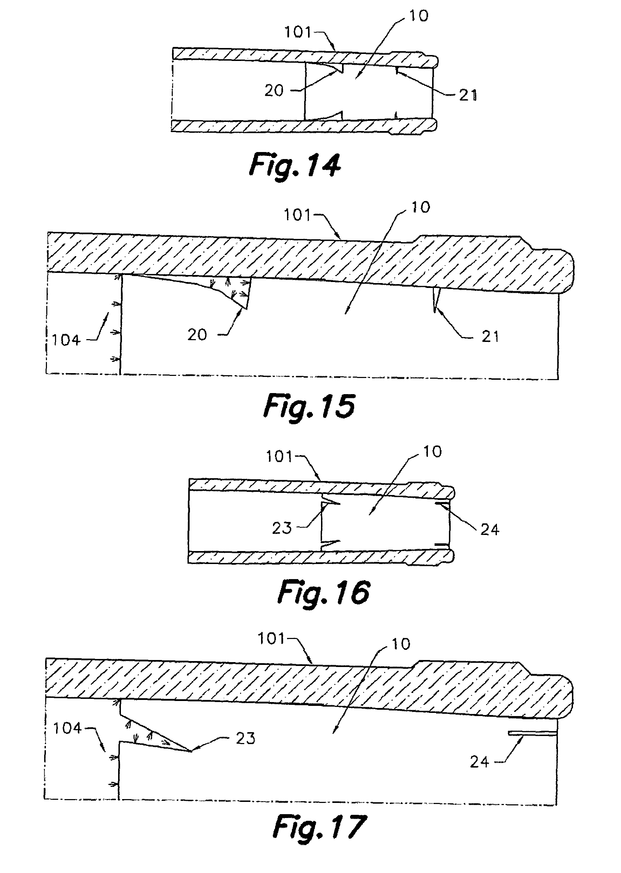

Figures 14 to 19 describe stoppers 10 according to embodiments intended for bottles 101 of sparkling wine, which are typically stored laying down, such that the wine is in contact with the stopper 10. It must be pointed out that circular grooves have been made both in the direction of retaining the liquid and in the opposite direction in these embodiments. This is because many wine companies usually place the stoppers in the bottles without having previously oriented the stoppers. Therefore, only the grooves which are oriented in the direction of retaining the liquid are detailed. In Figures 14 to 19 it can be seen that the pressure 104 inside the bottle 101 causes said grooves 20, 21, 23 and 24 in the stoppers 10 to widen, which causes an effect of dilatation or expansion of their contour in the form of a ring-shaped plugging lip towards the glass of the neck of the bottle 101 and this ring-shaped plugging lip consequently provides a more secure closure in cooperation with the pressure inside the bottle 101.

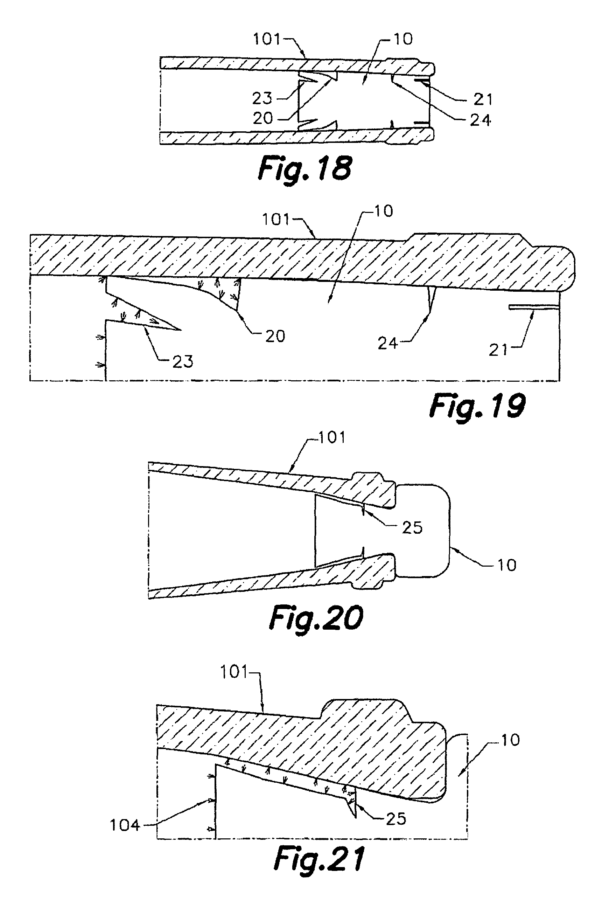

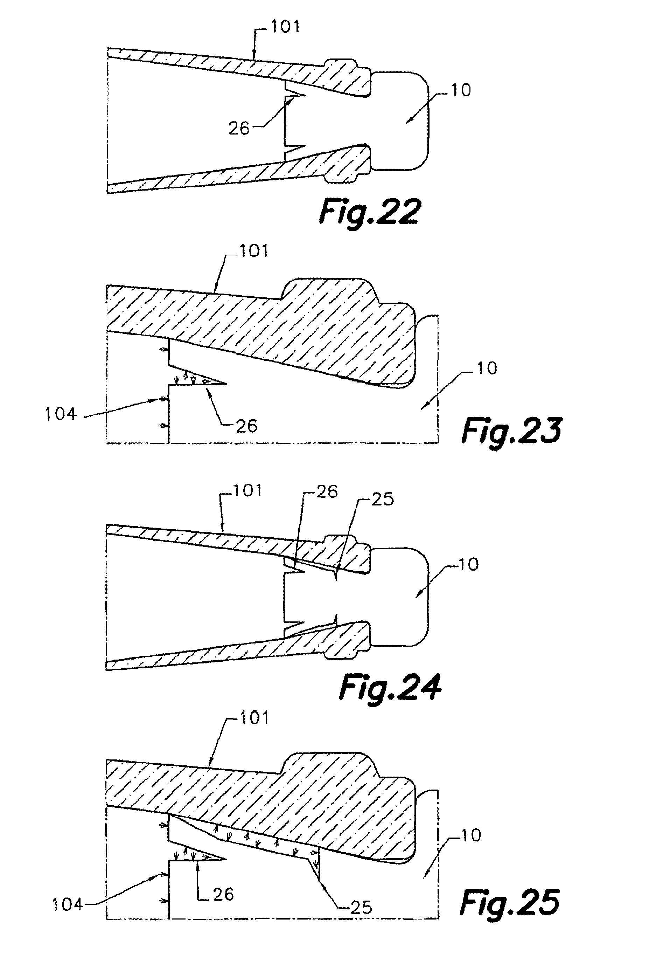

Figures 21 to 25 depict embodiments of a stopper 10 intended for bottles 101 of cava or champagne, which are typically stored lying down, such that the wine is in contact with the stopper 10. In the stoppers 10 of Figures 21 to 25 the pressure 104 inside the bottle 101 causes the mentioned circular grooves 25, 26 to widen, which causes and effect of dilatation or expansion of their contour in the form of a ring-shaped plugging lip towards the glass of the neck of the bottle 101 and consequently provides a more secure closure.

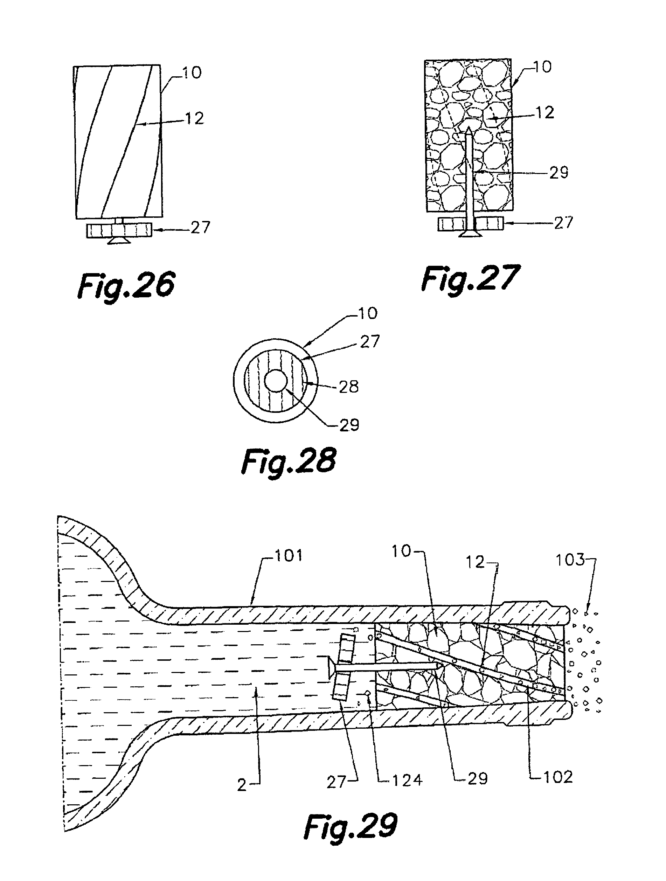

Figures 26 to 28 depict a stopper 10 of the present invention with helical channels 12 formed in the side wall of the stopper and extending from one of its bases to the other, in which a piece of wood 27 provided of natural veins 28 of the wood is mechanically secured to the stopper 10. The piece of wood 27 has, for example, the shape of a ring and can be adhered to the stopper 10 by means of an adhesive or secured to the base of the stopper 10 by means of an element 29, which can be a metal, synthetic or wooden nail. The piece of wood 27 in contact with the liquid allows the transmission of its tannins and transmits its flavor to the wine 2. It must be taken into account that said piece of wood 27 can have an endless number of organoleptic properties, since the wood can be of different types (French oak, American oak, etc.), can be treated by means of scorching, impregnated with aromatic elements and can have different diameters and thicknesses, whereby a greater or lesser migration of its properties to the wine can be achieved.

Figure 29 shows the stopper 10 of Figures 26 to 28 installed in a bottle 101 of wine 2, for example a red wine for laying down. In the example of Figure 29, it can be seen that the piece of wood 27 is secured by a mechanical element 29, not adhered to the stopper 10, but rather separated a certain distance to thus provide a greater surface of contact with the wine 2. It can also be seen how the grooves 12 allow an interaction between the outer atmosphere 103 and the inner gas 124, in this case gas dissolved in the wine 2, in order to allow micro-oxygenation of the wine 2. The piece of wood 27, combined with the grooves 12 in the stopper 10, can cause in the wine effects similar to those of a wine cask, consisting of the micro-oxygenation and transmission of the flavor and tannins of the wood to the wine, i.e., the aging thereof.

The stopper 10 according to the present invention can have an endless number of embodiments, and is not limited to the number, shapes, widths, depths and paths of the grooves shown in the drawings.

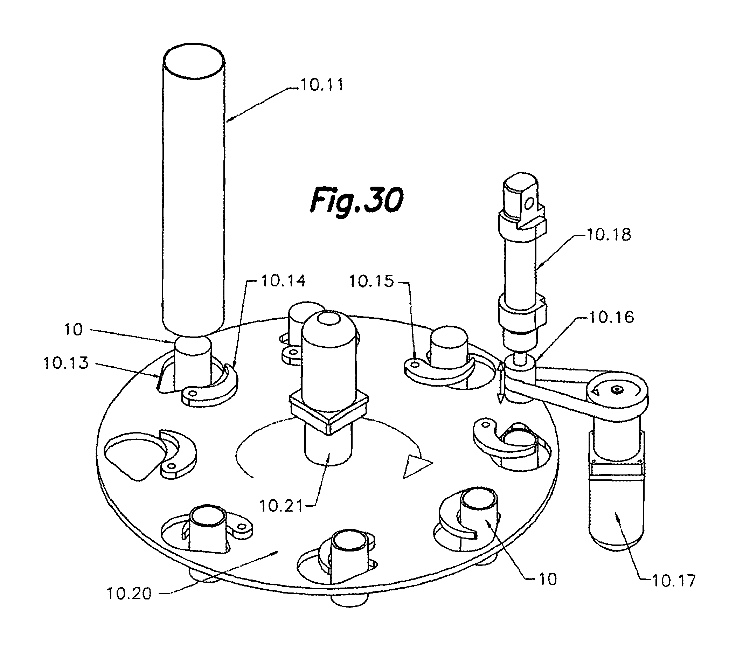

Now in reference to Figure 30, it schematically shows a machine for the manufacture of circular grooves at one of the bases of a stopper 10 according to an embodiment of the second aspect of the present invention. The machine comprises a rotating plate 10.20 of sequential shifting, the shifting of which is produced by a geared motor 10.21. The rotating plate 10.20 has a series of holes 10.13 each sized to receive a stopper 10. Perpendicular to said rotating plate and in a stationary location there is superimposed a tube 10.11 for feeding the stoppers 10 to said rotating plate 10.20, in which the stoppers 10 are introduced and positioned in said holes 10.13, which are associated with catches 10.14 operated to immobilize the stopper 10 once it has been positioned in the next movement 10.15. In another stationary angular position there is a circular cutting gouge 10.16 facing one of the stop positions of the rotating plate 10.20. When the stoppers 10 sequentially reach the position of the circular gouge 10.16, the latter is shifted by means of a pneumatic piston 10.18 towards the base which is located at the upper end of the stopper 10 producing the desired groove, at the same time the circular gouge 10.16 rotates due to the effect of a motor 10.17. Once the circular groove is made, the rotating plate 10.20 rotates sequentially shifting the stopper 10 until the catch 10.14 securing it opens and allows the hole 10.13 to be free for being able to receive the next stopper 10.

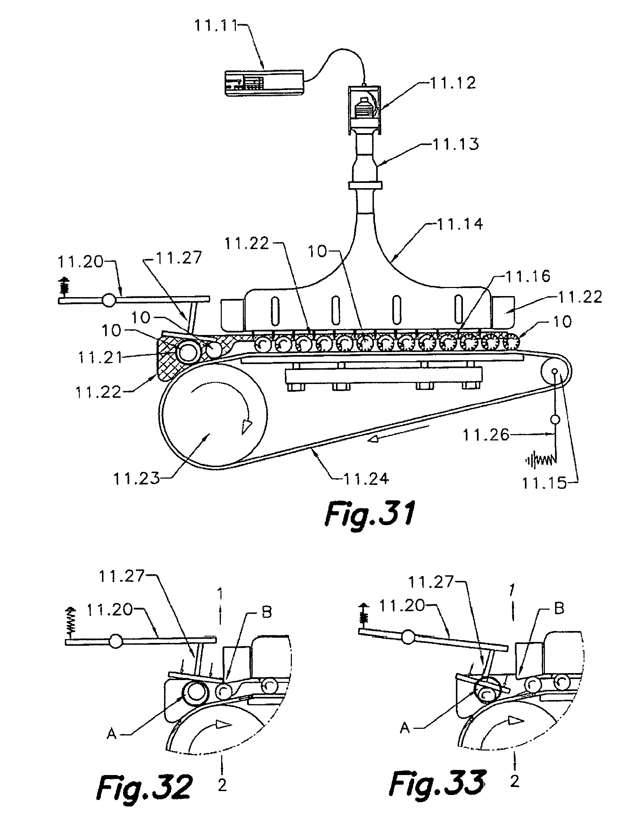

Now in relation to Figures 31 to 33, a machine is described below for making the substantially parallel grooves in the side wall of the stoppers, according to another embodiment of the second aspect of the present invention. Figures 32 and 33 show a plan view of several enlarged details for illustrating an automatic stopper feed system. Figure 31 shows an engraving device comprising a generator 11.11, a converter 11.12, a booster 11.13 and finally a sonotrode 11.14 in which an engraving tool 11.16 for forming the channels, grooves or notches in the side wall of the stoppers is located. At the entrance to the machine there is a tube 11.21 through which the non-engraved stoppers 10 are supplied from a feed system which can be any one of the several feed systems known in the sector. Once they have dropped down, the stoppers 10 are supported at one of their ends on a strip 11.22 which has the function of holding the stoppers 10 in the vertical position along their entire path. A pulley 11.23 driven with a geared motor (not shown) rotates and drives a belt 11.24 which has a height that is equal to or greater than that of the stoppers 10, said belt shifts and turns the stoppers on an engraving tool 11.16 and is tensed by means of a free-turning pulley 11.15, which is secured to a mechanical arm 11.26 at the end of which there is a tension spring so that said belt 11.24 is suitably secured, guided and perfectly extended.

As is shown in Figures 32 and 33, once the stoppers 10 have been dropped down and fed to the machine through the tube 11.21, they are supported vertically on the strip 11.22 and are pushed in a direction 2 towards an area A against the belt 11.24 by a pushing device 11.27, which is coupled to a lever 11.20 at the opposite end of which there is located a spring which presses pushing device in said direction 2. The movement of the belt 11.24 shifts the stopper which is being pressed by the pushing device 11.27 against the same towards an area B, and the movement of the stopper pushes the pushing device 11.27 backwards against the force of the spring towards the direction 2, which provides a sufficient gap to allow the feeding of a new stopper through the tube 11.21. Next, the previous stopper leaves the area B and gets away from the pushing device 11.27, and as a result, the spring again moves the pushing device 11.27 in the direction 2 to push the new stopper towards the area A while the previous stopper enters the area in which the engraving tool 11.16 is located, and so on and so forth. In summary, the pushing device 11.27 performs a back and forth movement in directions 1 and 2, alternatively providing a gap in which the stoppers are fed to the machine and pushing the stoppers towards the belt which drives them towards the engraving tool 11.16 which will make the predetermined grooves in their side wall.

A person skilled in the art will be able to make modifications and variations from the embodiments shown and described without departing from the scope of the present invention as it is defined in the attached claims.

## Claims

1. A stopper for closing bottles with means for control of the plugging conditions, **characterized in that** it comprises at least one recess, groove, cut or notch in an outer surface of the stopper which, since it is located in a side wall of the stopper with at least one first configuration, provides a route of passage for gaseous fluid between the inside and the outside of the bottle and when it is located in one of the bases and/or in a side wall of the stopper with at least one second configuration, provides an increase in the plugging capacity of the stopper in cooperation with an internal pressure.

2. The stopper according to claim 1, **characterized in that** said recess or notch has the configuration of a groove which extends along said side wall of the stopper from one of its bases to the other.

3. The stopper according to claim 1, **characterized in that** said recess or notch is a helical groove with a selected helix passage providing a superior or inferior length to said route or passage for the gaseous fluids

4. The stopper according to claim 1, **characterized in that** the mentioned cut or recess provides a ring-shaped plugging lip in opposition to a pressure inside the bottle which generates a force for expelling the stopper.

5. The stopper according to claim 3, **characterized in that** the mentioned recess is formed in at least one of the ends of the stopper.

6. The stopper according to claim 1, **characterized in that** the stopper incorporates a piece of treated or untreated wood.

7. The stopper according to claim 1, **characterized in that** said liquid is wine or an alcoholic beverage and **in that** said recesses or notches are sized to facilitate micro-oxygenation between the inside and the outside of the bottle suitable for allowing the wine to have suitable and substantially homogenous conditions of aroma, flavor, structure and color in all the bottles closed by means of different stoppers.

8. A machine for being used in the manufacture of stoppers for closing bottles with means for control of the plugging conditions, said stoppers being made of a material derived from cork or synthetic material, **characterized in that** it comprises means for rotating the stoppers in relation to an engraving or cutting tool or for rotating said engraving or cutting tool in relation to the stoppers to make at least one recess, notch or cut in a side wall of the stopper and/or in at least one of its bases.

9. The machine according to claim 8, **characterized in that** said means comprise a conveyor on which the stoppers are supported on one side of their side wall and said engraving or cutting tool is facing the opposite side of the side wall of the stoppers to make said recess, notch or cut in the side wall of the stoppers supported on the conveyor.

10. The machine according to claim 7, **characterized in that** said engraving or cutting tool is a circular cutting head, and said means comprise a rotating plate which moves the stoppers synchronously with the operation of said circular cutting head, which operates to make said recess, notch or cut in a base of the stopper.

11. The machine according to claim 7, **characterized in that** said engraving or cutting tool comprises an ultrasound device.
